# EUROPÄISCHE PATENTSCHRIFT

(11) **EP 4 149 698 B1**
(45) Veröffentlichungstag und Bekanntmachung des Hinweises auf die Patenterteilung: **11.10.2023**
(21) Anmeldenummer: 21727357.2
(22) Anmeldetag: 10.05.2021
(51) Int. Cl.: B21D 43/05, B30B 15/30, B25J 19/00

(54) **TRANSFERSYSTEM FÜR PRESSEN UND PRESSENANORDNUNG**
TRANSFER SYSTEM FOR PRESSES AND PRESS ASSEMBLY
SYSTÈME DE TRANSFERT POUR PRESSES ET ENSEMBLE PRESSE

(30) Priorität: 11.05.2020 DE 102020112613
(43) Veröffentlichungstag der Anmeldung: 22.03.2023
(73) Patentinhaber: Aida Europe GmbH, 88250 Weingarten (DE)
(72) Erfinder: SPIESSHOFER, Thomas, 88250 Weingarten (DE); MÜLLER, Christian, 88250 Weingarten (DE); WEBER, Elmar, 88250 Weingarten (DE); PFOHL, Anett, 88250 Weingarten (DE)
(74) Vertreter: Nowack, Linda
(86) Internationale Anmeldenummer: PCT/DE2021/100426
(87) Internationale Veröffentlichungsnummer: WO 2021/228326

(56) Entgegenhaltungen:
- EP-B1- 1 161 317
- DE-C1- 19 801 229
- DE-U1- 20 321 229

## Beschreibung

Die Erfindung betrifft ein Transfersystem für Pressen und eine Pressenanordnung.

Zu bearbeitende Werkstücke werden von Transfersystemen von einer Presse zu einer nächsten Presse einer Pressenanordnung transportiert. Die Bewegungsarme der Transfersysteme führen Bewegungen in horizontaler und vertikaler Richtung bzw. einer Kombination daraus aus. Hierfür ist eine Gelenkkinematik vorgesehen, bei welcher die Vertikalbewegung über eine sogenannte dynamische Hubachse ausgeführt wird. Eine solche Gelenkkinematik ist beispielsweise in der deutschen Patentanmeldung DE 100 09 574.7 A1 offenbart.

Ferner ist aus der EP 1 313 575 B1 eine Einrichtung zum Transportieren von Werkstücken in einer Presse bekannt, bei welcher ein aus zwei gleichlangen und mechanisch über ein entsprechendes Umlenkmittel gekoppelten Hebelarmen bestehender Bewegungsarm vorgeschlagen wird. Eine Vertikalbewegung des gesamten Bewegungsarms erfolgt mittels einer Hubachse.

Außerdem ist aus dem deutschen Gebrauchsmuster DE 20 2019 104 088 U1 ein Einarm-Transfersystem bekannt, das insbesondere bei beengten Bauraumbedingungen flexibel einsetzbar ist. Dies wird durch mindestens zwei miteinander über eine Drehachse verbundene Gelenkhebel erreicht, von denen einer mit einem an einer Hubvorrichtung befestigten Sockel verbunden ist. Auch hier werden die Gelenkhebel durch Verfahren der Hubachse bewegt.

Da mit der Hubvorrichtung bzw. der Hubachse große Massen bei hoher Geschwindigkeit bzw. hohen Beschleunigungen bewegt werden müssen, sind hohe Antriebsmomente mit hohem Energieverbrauch erforderlich, und es wirken hohe Kräfte und hohe Geschwindigkeiten in Führungen, was zu einem schnelleren Verschleiß führen kann. In der EP 1 161 317 B1 wird dies adressiert, indem ein Transportsystem bereitgestellt wird, das einen in vertikaler Richtung wirkenden Gewichtsausgleichszylinder aufweist, um die Antriebselemente zu entlasten. Dieser Gewichtsausgleichszylinder ist am Schlitten befestigt, auf dem der Schwenk- bzw. Transportarm gelagert ist.

Ferner ist aus der DE 10 2006 037 365 B4 eine Vorrichtung zum Transport von Formteilen zwischen Bearbeitungsstufen einer Mehrständer-Transferpresse, Pressenstraße, Umformmaschinenanlage oder dgl. mit einer Quertraverse mit Haltelementen wie Saugerspinnen oder dergleichen zur Weitergabe und/oder Positionierung der Formteile bekannt. Hierbei umfasst die Quertraverse wenigstens zwei Teiltraversen, welche gegeneinander in wenigstens eine Raumrichtung versetzt angeordnet sind. Ferner offenbart die DE 203 21 229 U1 ein Transfersystem mit den Merkmalen des Oberbegriffs des Patentanspruchs 1.

Da es immer noch Verbesserungspotential bezüglich der Entlastung der Antriebe gibt, ist es eine Aufgabe dieser Erfindung, ein energieeffizientes und kompaktes Transfersystem für Pressen sowie eine Pressenanordnung bereitzustellen. Diese Aufgabe wird erfindungsgemäß durch die Merkmale der unabhängigen Patentansprüche gelöst. Vorteilhafte Ausgestaltungen sind Gegenstand der abhängigen Ansprüche.

Nachfolgend wird unter dem Begriff Presse auch eine Bearbeitungsstation einer Mehrstößelpresse verstanden. Deshalb werden die Begriffe Presse und Bearbeitungsstation nachfolgend synonym verwendet.

Vorgeschlagen wird ein Transfersystem für Pressen, aufweisend mindestens zwei einander gegenüberliegend angeordnete Befestigungseinheiten, wobei jede der Befestigungseinheiten jeweils einen ersten Befestigungsbereich aufweist. Ferner weist das Transfersystem eine Pressen-Transfereinheit auf, bestehend aus zwei einander gegenüberliegend angeordneten Bewegungsarmen, sowie einer damit verbundenen Traverse zur Aufnahme und zum Transport, d.h. inklusive Ablegen, eines Werkstücks. Jeder der Bewegungsarme weist eine erste, an dem ersten Befestigungsbereich befestigte Antriebseinheit, einen ersten Hebelarm, eine zweite Antriebseinheit und einen zweiten Hebelarm auf. Der erste Hebelarm ist an einem ersten Ende davon oder zwischen dem ersten und einem zweiten Ende mit der ersten Antriebseinheit und an dem zweiten Ende davon mit der zweiten Antriebseinheit verbunden. Der zweite Hebelarm ist an einem ersten Ende davon mit der zweiten Antriebseinheit drehbar verbunden, und mit einem zweiten Ende davon mit der Traverse beweglich verbunden. Außerdem ist mindestens ein Energie speicherndes Element je Bewegungsarm vorgesehen, das derart gebildet und angeordnet ist, dass seine Kraft oder eine Kraftkomponente davon in Beschleunigungsrichtung der Traverse mit oder ohne Werkstück weist. In einer Ausführung c1 ist ein zweiter Befestigungsbereich an der Befestigungseinheit vorgesehen und das Energie speichernde Element ist mit einem ersten Ende davon direkt oder indirekt mit dem zweiten Befestigungsbereich verbunden und an einem zweiten Ende davon an einem vorgegebenen Bereich des Bewegungsarms befestigt. In einer zusätzlichen oder alternativen Ausführung c2 ist das Energie speichernde Element mit einem ersten Ende am ersten Hebelarm und mit einem zweiten Ende davon am zweiten Hebelarm befestigt.

Wie beschrieben sind die Bewegungsarme, genauer die erste Antriebseinheit jedes der Bewegungsarme, an einem dafür vorgesehenen ersten Befestigungsbereich der Befestigungseinheit in einer vorgegebenen Höhe befestigt. Die Höhe der Befestigung hängt von der Art der Presse bzw. der Bearbeitungsstationen und dem zu bearbeitenden Werkstück ab. Ein Werkstück kann sowohl ein Einzelteil sein, als auch aus mehreren Teilstücken bestehen, die von der Traverse bzw. dem daran befestigten Tooling gemeinsam aufgenommen werden.

Die Hubbewegung ist bisher nur durch ein Bewegen entlang der Vertikalachse möglich. Der Antrieb dafür wird als dynamische Hubachse oder Hubvorrichtung bezeichnet. Hier wirken große Kräfte und es sind hohe Antriebsmomente erforderlich, da die gesamte Transfereinheit samt Achse mit Motor, Getriebe etc. mit hoher Dynamik bewegt werden muss, d.h. es sind schnelle Änderungen der Bewegungen durch Abbremsen bzw. Beschleunigen umzusetzen. Durch zwei miteinander verbundene Hebelarme je Bewegungsarm, die jeweils mit unabhängig voneinander ansteuerbaren Antriebseinheiten ausgestattet sind, können überlagerte Bewegungen aus vertikaler und horizontaler Richtung ohne eine dynamische Hubachse realisiert werden.

Das heißt, dass durch das Bereitstellen von zwei Antriebseinheiten je Bewegungsarm jeder beliebige Punkt im erforderlichen Transferbereich angefahren werden kann, ohne dass die gesamte Masse der Pressen-Transfereinheit vertikal bewegt werden muss.

Das vorgeschlagene Energie speichernde Element wirkt in Beschleunigungsrichtung der Traverse, also nicht nur in vertikaler Richtung, so dass es als Energiespeicher zur Unterstützung der Bewegung des Bewegungsarms wirkt. Somit können die Spitzenwerte der Antriebsdrehmomente während des gesamten Bewegungsablaufes wesentlich verkleinert werden. Die Auslegung und Anordnung des Energie speichernden Elements beeinflusst also wesentlich die Dimensionierung der Antriebseinheiten. Durch die vorgeschlagene Anordnung des Energie speichernden Elements wird erreicht, dass die Antriebseinheiten in Bewegungsbereichen, in denen sie stark beansprucht sind, insbesondere im kollisionskritischen Bereich, unterstützt und damit entlastet werden. Dies erfolgt, indem die Energie speichernden Elemente energetisch aufgeladen werden, z.B. bei Anwendung einer mechanischen Schraubenfeder durch Spannen oder bei Verwenden eines elektromechanischen Federelements durch Aufladen des elektrischen Energiespeichers oder durch Verwenden eines Gewichtselements, und/oder durch Abgabe der aufgeladenen Energie. Dadurch können die Antriebseinheiten kleiner ausgelegt werden, was Gewicht, Energie und damit Kosten spart.

Der Transferbereich ist sowohl der kollisionskritische Bereich, wenn sich zumindest Teile der Pressen-Transfereinheit innerhalb des Bearbeitungsbereichs bzw. des Werkzeugbereichs einer Presse bzw. Bearbeitungsstation befinden, als auch der nicht kollisionskritische Bereich. Dieser ist der Bereich, in dem sich die Pressen-Transfereinheit außerhalb von Bearbeitungsbereichen der Bearbeitungsstationen befindet, z.B. im Bereich zwischen zwei Pressen bzw. Bearbeitungsstationen, aber außerhalb des Bearbeitungsbereichs. Weiterhin gibt es kritische Bereiche, in denen eine Kollision der Pressen-Transfereinheiten untereinander ausgeschlossen werden muss.

Wie bereits erwähnt sind zwei Bewegungsarme mit einer daran angeordneten Traverse vorgesehen, die einander gegenüberliegend angeordnet sind und einen vorgegebenen Bewegungsablauf durchlaufen, um ein Werkstück von einer Presse, nachfolgend auch als Bearbeitungsstation bezeichnet, in die nächste Presse zu transferieren. Dabei weisen die Bewegungsarme eine Ausgangsposition auf, in welcher zumindest der erste Hebelarm nahezu senkrecht, d.h. nahezu in einer Vertikalachse, steht.

Durch Bewegen in einem vorgegebenen Bewegungsablauf werden die Bewegungsarme von der Ausgangsposition in eine erste Position, in der ein Werkstück aufgenommen wird, und durch Passieren der Ausgangsposition in eine zweite Position, in der das Werkstück abgelegt wird, und zurück, d.h. von der zweiten Position mindestens in die Ausgangsposition, bewegt. Somit kann ein Werkstück von einer Presse bzw. Bearbeitungsstation zur nächsten transferiert werden. Nachdem das Werkstück in der ersten Position, also einer ersten Presse bzw. Bearbeitungsstation, aufgenommen wurde, wird es durch Passieren der Ausgangsposition zur zweiten Position, also zur nächsten Presse bzw. Bearbeitungsstation, bewegt und dort zur Weiterverarbeitung abgelegt. Dann bewegt sich der Bewegungsarm leer, d.h. ohne Werkstück, entweder nur in die Ausgangsposition zurück, oder er bewegt sich wieder zur ersten Position, um ein weiteres Werkstück aufzunehmen, und dieses dann wieder durch Durchlaufen des Bewegungsablaufs in der zweiten Position abzulegen.

Das Energie speichernde Element ist dabei derart ausgelegt, dass es in der Ausgangsposition eine minimale gespeicherte Energie aufweist, und in einer Bewegungsphase zwischen Ausgangsposition und erster Position und/oder zwischen Ausgangsposition und zweiter Position jeweils bis zu einem vorgegebenen Grad energetisch aufgeladen wird, je nach Ausführung des Energie speichernden Elements. In einer Bewegungsphase zwischen zweiter Position und Ausgangsposition und/oder zwischen erster Position und Ausgangsposition gibt es die gespeicherte Energie wieder ab.

Durch die Anordnung des Energie speichernden Elements derart, dass es Energie in einer bestimmten Bewegungsphase, die auch das Abbremsen umfasst, speichert, kann diese Energie zur Beschleunigung des Bewegungsarms und damit der Traverse mit oder ohne Werkstück wieder verwendet werden, so dass mindestens eine Antriebseinheit unterstützt wird. Damit arbeitet das gesamte System über den gesamten Bewegungsablauf energieeffizienter. Das heißt, es wird direkt Energie gespart, indem Antriebsspitzen durch das Energie speichernde Element reduziert werden. Außerdem können die Antriebseinheiten kleiner dimensioniert werden, so dass eine indirekte Einsparung an Energie erfolgt, indem Gewicht gespart wird. Das Energie speichernde Element weist eine lineare oder nichtlineare Kennlinie auf, welche zeit- oder weggesteuert veränderbar gestaltet werden kann.

In einer Ausführung ist ein derart am Bewegungsarm angeordneter Schwenkantrieb vorgesehen, dass er die Traverse um ihre Längsachse oder nahe ihrer Längsachse rotieren bzw. drehen kann. In einer weiteren Ausführung ist der Schwenkantrieb in Kombination mit einer mechanischen Umlenkvorrichtung vorgesehen, die dazu eingerichtet ist, die Traverse während des gesamten Bewegungsablaufes in horizontaler Lage zu halten. Der Schwenkantrieb ist unabhängig von den Antriebseinheiten ansteuerbar.

Um die Bewegung der Traverse zum Transfer von Werkstücken zwischen, zu oder aus Pressen bzw. Bearbeitungsstationen einer Pressenanordnung zu ermöglichen, sind die Bewegungsarme gleichartig, aber spiegelbildlich zueinander, gebildet. Diese Anordnung aus einem Paar an Bewegungsarmen und der Traverse wird auch als Pressen-Transfereinheit bezeichnet. Vorteilhaft sind die Bewegungsarme auch gleichartig ausgerichtet, d.h. die Bewegungsarme folgen in der Regel auch demselben oder einem sehr ähnlichen Bewegungsablauf, so dass ein an der Traverse angeordnetes Werkstück in einer Pressenanordnung zu den Pressen bzw. Bearbeitungsstationen bewegt werden kann. Die Bewegungsarme bewegen sich also in zueinander parallelen Ebenen, genauer vertikalen Ebenen. Sie werden mittels voneinander unabhängigen Antriebseinheiten unabhängig voneinander angesteuert. Sie können sich daher synchron, aber auch in gewissem Rahmen asynchron, zueinander bewegen, um z.B. eine Schieflage der Traverse zu realisieren. Hierfür sollte dann ein Längenausgleich an einem der beiden Enden der Traverse vorgesehen sein.

In einer weiteren Ausführung ist die erste Antriebseinheit zwischen dem ersten und dem zweiten Ende des ersten Hebelarms angeordnet und das Energie speichernde Element ist mit dem ersten Ende verbunden.

In einer weiteren Ausführung ist die erste Antriebseinheit zwischen dem ersten und dem zweiten Ende des ersten Hebelarms angeordnet und ein dritter Hebelarm ist vorgesehen, der mit einem ersten Ende davon an dem ersten Ende des ersten Hebelarms drehbar befestigt und mit einem zweiten Ende davon an einem dritten, an der Befestigungseinheit vorgesehenen, in vertikaler Richtung verschiebbaren Befestigungsbereich befestigt ist, und wobei das Energie speichernde Element mit diesem zweiten Ende verbunden ist. Der dritte Befestigungsbereich ist mit dem dritten Hebelarm mechanisch gekoppelt, d.h. bewegt sich immer mit diesem. Um dies zu realisieren kann er z.B. über einen Schlitten dynamisch verschiebbar sein.

In einer weiteren Ausführung ist das Energie speichernde Element als mechanisches Federelement oder pneumatisches Federelement oder elektromechanisches Federelement gebildet, und im Falle c1 direkt mit dem zweiten Befestigungsbereich verbunden, da sein erstes Ende direkt damit verbunden ist. Bisher verwendete Federelemente dienen lediglich zum Gewichtsausgleich in vertikaler Richtung, um die an der Pressen-Transfereinheit anliegende Gewichtskraft der zu bewegenden Masse zu reduzieren. Durch Verwenden eines Federelements, dessen Kraft oder Kraftkomponente in Bewegungsrichtung der Traverse wirkt, werden die Antriebseinheiten entlastet, wie bereits beschrieben.

In einer weiteren Ausführung ist im Falle c1 das Energie speichernde Element indirekt mit dem zweiten Befestigungsbereich verbunden, da ein Umlenkmittel z.B. in Form einer Umlenkrolle an dem zweiten Befestigungsbereich vorgesehen ist. Das Energie speichernde Element weist ein Zugmittel, z.B. ein Seil oder einen Riemen, und ein Gewichtselement auf, das an einem ersten Ende des Zugmittels befestigt ist. Das zweite Ende des Zugmittels ist an dem vorgegebenen Bereich des Bewegungsarms befestigt, und das Zugmittel ist über das Umlenkmittel geführt.

In einer weiteren Ausführung sind ein dritter, an der Befestigungseinheit angeordneter, Befestigungsbereich sowie ein Federelement vorgesehen, wobei das Federelement mit einem ersten Ende an dem Gewichtselement und mit seinem zweiten Ende an dem dritten Befestigungsbereich befestigt ist.

In einer weiteren Ausführung ist das Federelement als mechanisches Federelement oder pneumatisches Federelement oder elektromechanisches Federelement gebildet.

In einer weiteren Ausführung ist mindestens ein an der Befestigungseinheit angeordnetes Einstellmittel vorgesehen, an dem die ersten und zweiten Befestigungsbereiche angeordnet sind, wobei zumindest eines der Einstellmittel in seiner Höhe entlang einer Vertikalachse verschiebbar ist. Durch Bereitstellen eines Einstellmittels kann eine Höhenverstellung zumindest beim Werkzeugwechsel erfolgen. Dabei sind unterschiedliche Ausführungen möglich. Vorteilhaft ist das Einstellmittel als ein geführter Schlitten gebildet, der über eine Rüstachse verstellt werden kann.

In einer weiteren Ausführung ist das Einstellmittel einteilig derart gebildet, dass die ersten und zweiten Befestigungsbereiche daran in einem vorgegebenen Abstand voneinander angeordnet sind. In einer alternativen Ausführung ist das Einstellmittel mehrteilig derart gebildet, dass jeweils einer der ersten und zweiten Befestigungsbereiche an einem der Einstellmittel angeordnet ist, wobei jedes Einstellmittel individuell verstellbar ist, oder die Einstellmittel sind nur gleichzeitig miteinander verstellbar.

In einer Ausführung ist vorgesehen, dass die ersten und/oder zweiten Hebelarme in ihrer Länge einstellbar gebildet sind. In einer alternativen Ausführung sind der erste und/oder der zweite Hebelarm in ihrer Länge dynamisch veränderbar, d.h. über separate Antriebe ausfahrbar oder einfahrbar, gebildet. In einer Ausführung weisen der erste und der zweite Hebelarm dieselbe oder voneinander verschiedene Längen auf. Somit wird eine weitere Rüstachse bereitgestellt, um werkzeugspezifische Höheneinstellungen oder Änderungen am Stufenabstand vornehmen zu können. Somit kann eine an der Befestigungseinheit vorzusehende Rüstachse ersetzt werden und die Pressen-Transfereinheit kann flexibler eingesetzt werden.

In einer Ausführung ist vorgesehen, dass die Traverse einen Längenausgleich an einem ihrer beiden Enden aufweist.

In einer Ausführung ist vorgesehen, dass die Traverse aus zwei miteinander an einer Kopplungsstelle miteinander koppelbaren Teiltraversen besteht.

In einer Ausführung ist vorgesehen, dass ein an der Traverse befestigtes Tooling entsprechend der Kopplungsstelle geteilt ist.

In einer Ausführung ist vorgesehen, dass die Kopplungsstelle starr oder gelenkig oder mit Längenausgleich oder gelenkig mit Längenausgleich ausgebildet ist.

In einer Ausführung ist vorgesehen, dass im Fall, dass die Teiltraversen voneinander entkoppelt sind, nur einer der Bewegungsarme betrieben wird.

In einer Ausführung ist vorgesehen, dass ein weiterer Bewegungsarm in Transportrichtung hinter oder vor dem Bewegungsarm, der betrieben wird, vorgesehen ist und zum gemeinsamen Transport eines Werkstückes mit demselben Bewegungsablauf dazu betrieben wird und ansonsten unabhängig dazu betreibbar ist.

Vorgesehen ist im Rahmen der vorliegenden Erfindung ferner eine Presse mit einem beschriebenen Pressen-Transfersystem, wobei die Befestigungseinheiten am Pressengestell der Presse montiert sind. Alternativ ist ferner eine Presse mit einem beschriebenen Pressen-Transfersystem sowie ein von der Presse freistehendes Gestell vorgesehen, an dem die Befestigungseinheiten angebracht sind.

Vorgesehen ist im Rahmen der vorliegenden Erfindung ferner eine Pressenanordnung, aufweisend mehrere, derart hintereinander und in einer vorgegebenen Bearbeitungsrichtung angeordnete Pressen bzw. Bearbeitungsstationen, dass ein Werkstück von einer ersten bis zu einer letzten Presse bzw. Bearbeitungsstation mittels der Bewegungsarme transferiert werden kann.

In einer Ausführung ist jeweils ein Pressen-Transfersystem mittig zwischen zwei aufeinanderfolgenden Pressen angeordnet.

In einer Ausführung weist die erste der Pressen bzw. Bearbeitungsstationen zwei zusätzliche, einander gegenüberliegend angeordnete Befestigungseinheiten auf, die an der Seite der Presse angeordnet sind, von der die Werkstücke erstmalig der Pressenanordnung zur Bearbeitung zugeführt werden. Zusätzlich oder alternativ weist die letzte der Pressen zwei zusätzliche, einander gegenüberliegend angeordnete Befestigungseinheiten auf, die an der Seite der Presse angeordnet sind, von der sie nach letztmaliger Bearbeitung aus der Pressenanordnung entfernt werden.

Wie bereits erwähnt folgen die Bewegungsarme demselben Bewegungsablauf, so dass ein an der Traverse angeordnetes Werkstück in einer Pressenanordnung durch Bewegung der Bewegungsarme mit der daran angeordneten Traverse zwischen, zu oder aus den Pressen bzw. Bearbeitungsstationen bewegt werden kann. Wie bereits erwähnt, kann ein System aus Bewegungsarmen und Befestigungseinheiten auch als Zuführeinrichtung, also vor einer ersten Presse bzw. Bearbeitungsstation einer Pressenanordnung, und/oder als Abführeinrichtung, also nach einer letzten Presse bzw. Bearbeitungsstation einer Pressenanordnung vorgesehen sein. Insofern sind diese Ausführungen ebenfalls abgedeckt, wenn nachfolgend lediglich von einem Bewegen zwischen zwei Pressen bzw. Bearbeitungsstationen gesprochen wird.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert.
Figur 1 zeigt eine schematische Schnittdarstellung einer Pressenanordnung gemäß einer Ausführung der vorliegenden Erfindung.
Figuren 2 bis 5 zeigen jeweils eine schematische Schnittdarstellung von Bewegungsarmen und Befestigungseinheiten mit einem als Federelement gebildeten Energie speichernden Element gemäß unterschiedlichen Ausführungen der vorliegenden Erfindung.
Figur 6 zeigt eine schematische Schnittdarstellung eines Bewegungsarms mit einer Kombination aus Umlenkvorrichtung und Schwenkantrieb gemäß einer Ausführung der vorliegenden Erfindung.
Figuren 7 und 8 zeigen jeweils eine schematische Schnittdarstellung von Bewegungsarmen und Befestigungseinheiten mit einem aus Zugmittel und Gewichtselement bestehenden Energie speichernden Element gemäß unterschiedlichen Ausführungen der vorliegenden Erfindung.
Figur 9 zeigt ein abstrahiertes Diagramm eines beispielhaften Energieverlaufs eines das Energie speichernden Elements über einen ganzen Bewegungsablauf gemäß einer Ausführung der vorliegenden Erfindung.
Figur 10 zeigt eine schematische Draufsicht in eine Presse mit einer geteilten Traverse gemäß einer Ausführung der vorliegenden Erfindung.

In den nachfolgenden Figurenbeschreibungen sind gleiche Elemente bzw. Funktionen mit gleichen Bezugszeichen versehen.

Jede Presse 1, 2, nachfolgend auch als Bearbeitungsstation 1, 2 bezeichnet, hat einen Stößel 11; 21, an dem ein Oberwerkzeug 12; 22 befestigt ist. Unterhalb des Stößels 11; 21 ist in einem Abstand dazu ein Unterwerkzeug 13; 23 angeordnet, das auf einem Pressentisch 14; 24 aufliegt. Zwischen Oberwerkzeug 12; 22 und Unterwerkzeug 13; 23 liegt ein Bearbeitungsbereich, in den ein zu bearbeitendes Werkstück 40 mittels einer an den Befestigungseinheiten 3 angeordneten Pressen-Transfereinheit eingebracht wird. Dann schließen Oberwerkzeug 12; 22 und Unterwerkzeug 13; 23, so dass das Werkstück 40 bearbeitet wird. Während sich das Werkzeug 12, 13; 22, 23 öffnet, wird das Werkstück 40 wieder mittels der Pressen-Transfereinheit aus dem Bearbeitungsbereich herausgefahren und in die darauffolgende, in einem Abstand M12 zur vorhergehenden Bearbeitungsstation 1 angeordnete, Bearbeitungsstation 2 eingelegt. Der Abstand M12 ist in dieser Ausführung der Mitte-Mitte-Abstand zwischen zwei Pressen bzw. Bearbeitungsstationen 1, 2. Die Ansteuerung der Pressen-Transfereinheit oder mehrerer aufeinanderfolgender Pressen-Transfereinheiten erfolgt über eine Steuereinheit bzw. Recheneinheit 300, die entweder als externes Gerät mit den anzusteuernden Pressen bzw. Bearbeitungsstationen 1, 2 verbunden ist, oder in einer oder mehreren Bearbeitungsstationen 1, 2 oder Komponenten davon direkt verbaut ist, oder einer Kombination daraus. Zu bearbeitende Werkstücke 40 werden beispielsweise mittels einem Tooling 200 wie einer Saugerspinne aufgenommen, in Durchlaufrichtung bzw. Bewegungsrichtung X transportiert und positioniert.

Die Bewegungsarme, welche einen ersten Hebelarm 110 und einen zweiten Hebelarm 120 aufweisen, folgen dabei vorgegebenen Bewegungsgesetzen und werkzeugspezifischen Bewegungsabläufen, wie später beschrieben. Da die Traverse 105 inklusive Tooling 200 mit dem zu bearbeitenden Werkstück 40 an den Hebelarmen 120 befestigt ist, folgt diese somit auch den Bewegungsabläufen und das Werkstück 40 kann in Transportrichtung bzw. Durchlaufrichtung bzw. Bewegungsrichtung X durch die Pressen bzw. Bearbeitungsstationen 1, 2 und nach Ablegen des Werkstücks 40 wieder zurückbewegt werden. Dabei ist zu beachten, dass der Bearbeitungsbereich ein kollisionskritischer Bereich ist, da sich mindestens Teile der Bewegungsarme, die Traverse 105 und das Tooling 200 beim Einbringen und beim Ausbringen des Werkstücks 40 für einen gewissen Zeitraum innerhalb des Bearbeitungsbereichs der Presse bzw. Bearbeitungsstation 1, 2 befinden. Wenn keine Bearbeitung erfolgt, befindet sich der Bewegungsarm in einer Ausgangsposition S, in der mindestens der erste Hebelarm 110 nahezu in der vertikalen Achse V angeordnet steht.

Wie in den Figuren gezeigt, weist jeder Bewegungsarm einen ersten Hebelarm 110 auf, der an einem ersten Ende davon mit der ersten Antriebseinheit 101 beweglich verbunden ist. An dem gegenüberliegenden Ende ist eine weitere Antriebseinheit 102 daran befestigt, welche den ersten Hebelarm 110 mit einem ersten Ende eines zweiten Hebelarms 120 verbindet. Die Traverse 105 verbindet beide Bewegungsarme und dient dazu, beispielsweise mittels eines daran befestigten Toolings 200 wie einer Saugerspinne ein oder mehrere zu bearbeitende Werkstücke 40 aufzunehmen und in Transportrichtung bzw. Durchlaufrichtung X von einer Presse bzw. Bearbeitungsstation 1, 2 in die nächste zu transportieren. Sie kann auch als Zuführ- oder Abführeinheit verwendet werden, wobei sie dann vor der ersten bzw. nach der letzten Presse bzw. Bearbeitungsstation 1, 2 angeordnet ist.

Die Traverse 105 kann unterschiedliche Toolings 200 wie eine Saugerspinne zum Halten von Werkstücken 40 aufweisen, um zu bearbeitende Werkstücke 40 aufzunehmen, zu transportieren, zu positionieren und abzulegen.

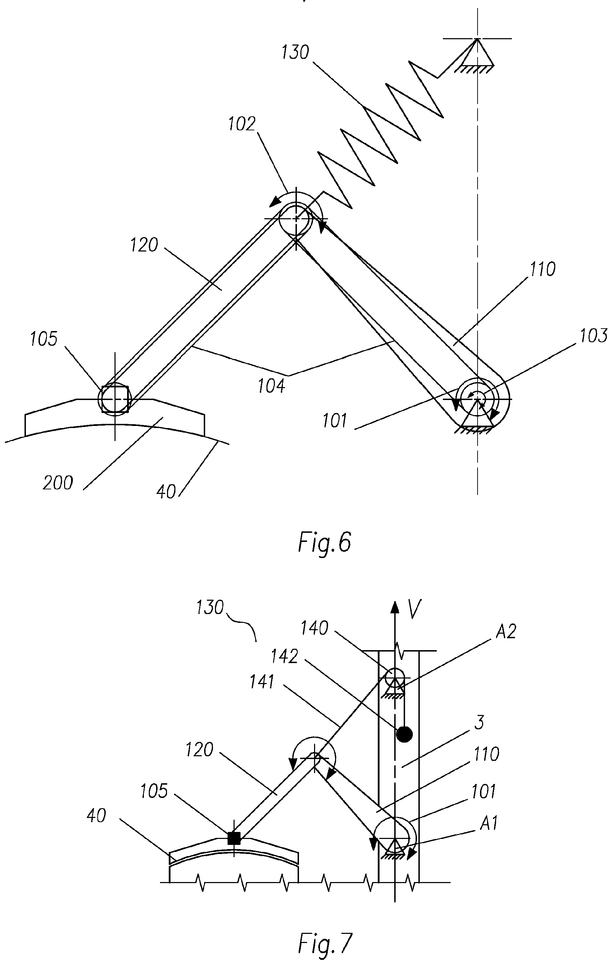

Ziel bei der Bewegung des Bewegungsarms ist es, dass die Traverse 105 immer horizontal liegt. Hierfür kann eine mechanische Umlenkvorrichtung 104 verwendet werden. Je nach Gestaltung des Werkstückes 40 kann eine aktive zusätzliche Schwenkung der Traverse 105 und damit des Werkstückes 40 in einem bestimmten Bereich des Transportweges, also dem kollisionskritischen Bereich, erforderlich sein. In diesem Fall kann vorgesehen sein, dass die Traverse 105 mit einem unabhängig steuerbaren Schwenkantrieb 103 zusätzlich gedreht/geschwenkt wird. Es wird also eine Kombination aus bekannter Umlenkvorrichtung 104 und Schwenkantrieb 103 verwendet, wie in Figur 6 gezeigt. Der Schwenkantrieb 103 kann somit wesentlich kleiner dimensioniert werden, was ein Herabsetzen der zu bewegenden Eigenmasse bewirkt und konstruktiv gestalterische Freiheiten bei der Platzierung des Schwenkantriebes 103 gibt, beispielsweise innerhalb des Traversenprofils.

Der erste Hebelarm 110 kann dieselbe Länge wie der zweite Hebelarm 120 aufweisen. Die Hebelarme 110, 120 können aber auch unterschiedliche Längen aufweisen. Weiterhin können die Hebelarme 110 und 120 in ihrer Länge einstellbar oder veränderbar, also mittels separater Antriebe ausfahrbar oder einfahrbahr, ausgeführt werden, um eine werkzeugspezifische Anpassung des Transferbereiches zu ermöglichen. Der zweite Hebelarm 120 ist mit seinem ersten Ende mit der zweiten Antriebseinheit 102 beweglich verbunden, steht also nicht wie bisherige Gelenkkinematik-Antriebe darüber hinaus oder ist gar über einen zusätzlichen Schlitten geführt.

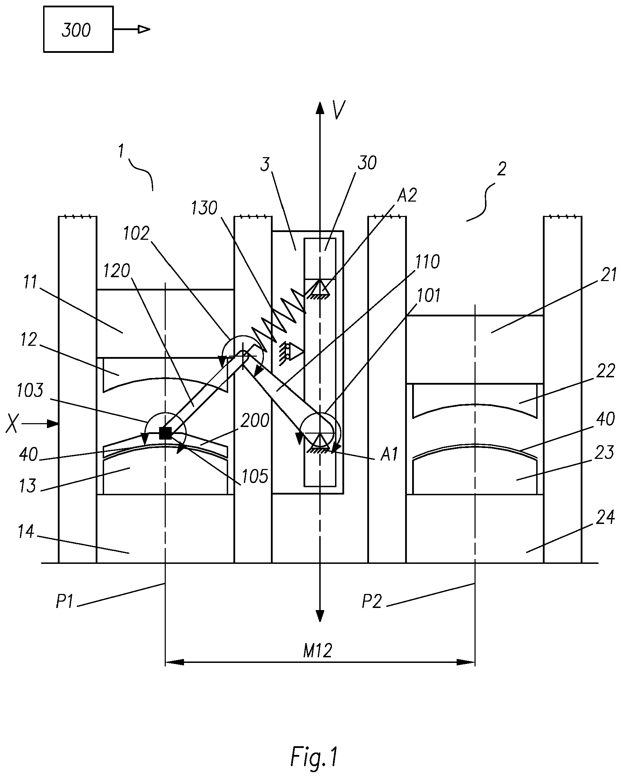

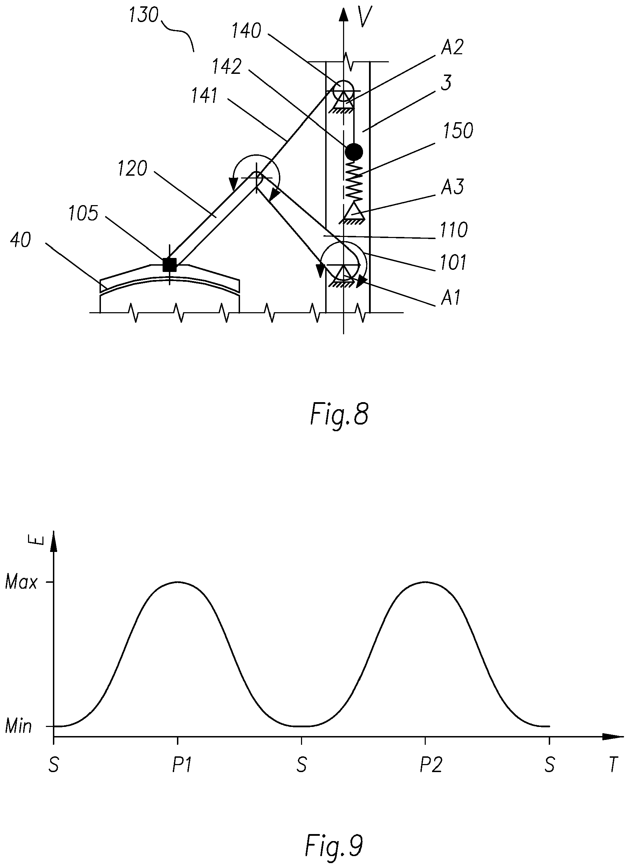

Das nachfolgend beschriebene Energie speichernde Element 130, 132 ist in Figuren 1 bis 6 als Federelement 130, 132, und in Figuren 7 und 8 als Zugmittel 141 mit Gewichtselement 142 ausgeführt.

Figur 1 zeigt eine schematische Schnittdarstellung einer Pressenanordnung mit zwei Pressen bzw. Bearbeitungsstationen 1 und 2, sowie eine zwischen den Pressen bzw. Bearbeitungsstationen 1 und 2 angeordnete, an der ersten Presse bzw. Bearbeitungsstation 1 befestigte Befestigungseinheit 3. Alternativ könnte (in allen Ausführungen) die Befestigungseinheit 3 auch an einem separaten, d.h. freistehenden, Gestell befestigt sein. In jeder Ausführung kann die erste Antriebseinheit 101 möglichst mittig zwischen zwei Pressen bzw. Bearbeitungsstationen 1, 2 angeordnet sein, so dass ein im Wesentlichen symmetrischer Bewegungsablauf möglich ist.

Der erste und der zweite Befestigungsbereich A1, A2 sind in dieser Ausführung an einem einteilig gebildeten, und in vertikaler Achse V verschiebbaren Einstellmittel 30 angeordnet. Das Einstellmittel 30 kann dabei dynamisch oder nicht dynamisch (als Rüstachse) verschiebbar sein. Somit sind die Befestigungsbereiche A1, A2 nur gemeinsam verschiebbar. Alternativ können die Befestigungsbereiche A1, A2 auch separat voneinander gebildet sein, d.h. das Einstellmittel 30 ist dann als zweiteiliges Einstellmittel 31, 32 gebildet. Grundsätzlich kann in jeder der gezeigten Ausführungen das Einstellmittel 30-32 auch weggelassen werden.

Figur 1 zeigt ferner ein als Federelement 130 gebildetes Energie speicherndes Element 130, das mit einem Endbereich in Verlängerung des zweiten Hebelarms 120 bzw. an der zweiten Antriebseinheit 102 und mit dem anderen Endbereich direkt an dem Befestigungsbereich A2 der Befestigungseinheit 3 befestigt ist. Das Federelement 130 dient als Energiespeicher, ist also ein mechanisches Federelement oder ein pneumatisches Federelement, also z.B. ein Pneumatikzylinder, oder ein elektromechanisches Federelement. Das Federelement 130, 132 ist derart gebildet und angeordnet, dass seine Kraft oder eine Kraftkomponente davon in Beschleunigungsrichtung der Traverse mit oder ohne Werkstück 40 weist.

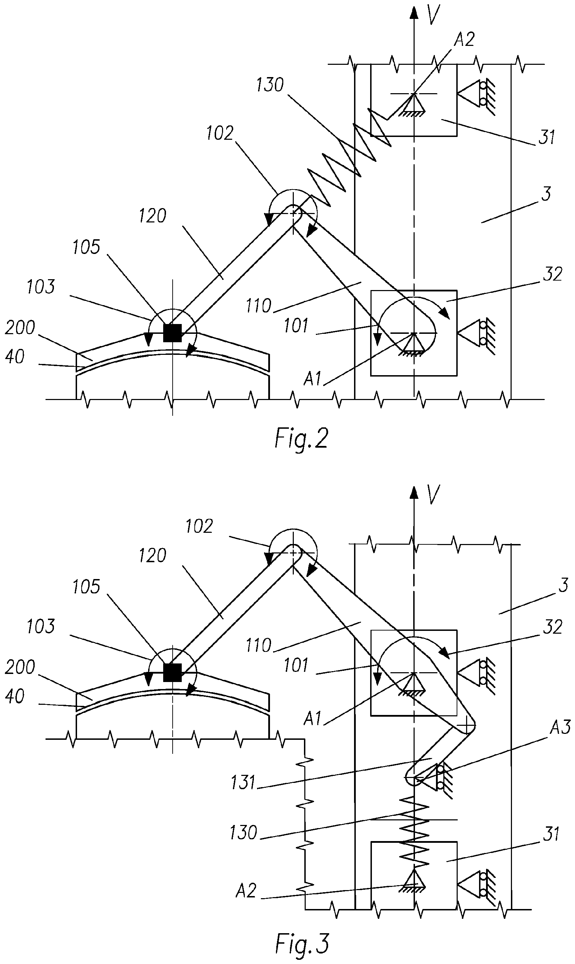

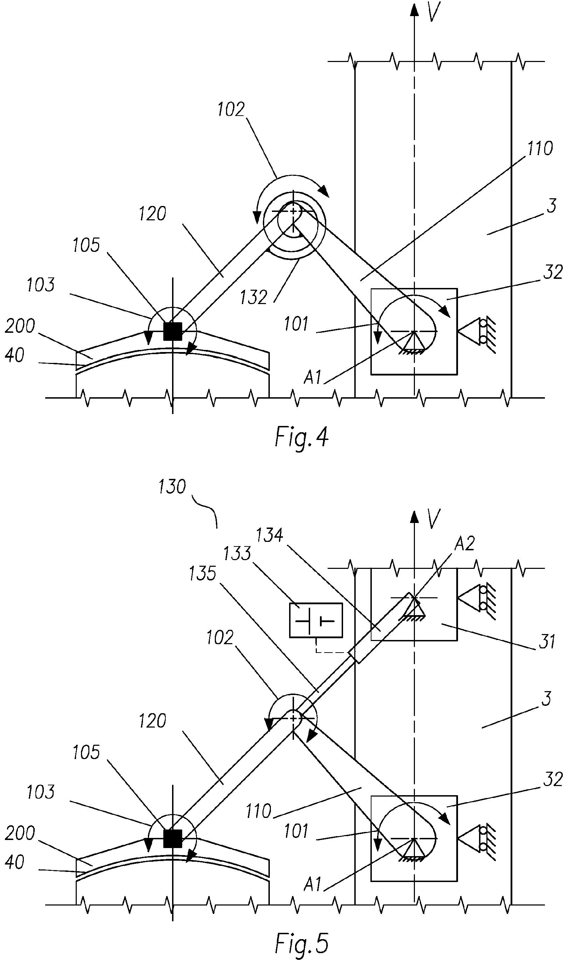

In den in Figuren 1, 2, und 5 bis 8 gezeigten Ausführungen dient das Energie speichernde Element 130 aufgrund seiner Anordnung dazu, in dieselbe Bewegungsrichtung wie die Traverse 105 zu wirken, um diese zu beschleunigen oder abzubremsen. In der in Figur 3 gezeigten und nachfolgend beschriebenen Ausführung ist das Federelement 130 in der Vertikalachse V angeordnet, wirkt aber aufgrund der Hebelanordnung mit drei Hebeln 110, 120, 131 in Bewegungsrichtung der Traverse 105 mit oder ohne daran befestigtem Werkstück 40. In der in Figur 4 gezeigten Ausführung ist das Federelement 132 als Spiralfeder zwischen dem ersten und dem zweiten Hebelarm 110, 120 angeordnet. In allen Fällen wirkt das Energie speichernde Element 130, 132 derart, dass die Pressen-Transfereinheit dynamischer aus dem kollisionsgefährdeten Bereich bewegt werden und im kollisionskritischen Bereich beim Abbremsen des Werkstücks 40 unterstützen kann, so dass das benötigte Antriebsmoment der Antriebseinheit 101 und/oder Antriebseinheit 102 reduziert wird. Die genaue Wirkung wird später anhand des in Figur 9 gezeigten Diagramms erläutert.

Figuren 2 bis 8 zeigen jeweils eine vergrößerte, schematische Schnittdarstellung von Bewegungsarmen, Befestigungseinheiten 3 und Einstellmitteln 30-32.

In Figuren 2, 3 und 5 ist das Einstellmittel 30 mehrteilig 31, 32 ausgeführt, d.h. die Befestigungsbereiche A1 und A2 können separat voneinander verstellbar sein. Der in Figur 3 gezeigte dritte Befestigungsbereich A3 ist mechanisch mit dem dritten Hebelarm 131 gekoppelt und ist deshalb zusammen mit diesem verschiebbar. Deshalb ist dieser vorteilhaft z.B. über einen verfahrbaren Schlitten an der Befestigungseinheit 3 angeordnet. Da beide Bewegungsarme gleich aufgebaut sind bzw. spiegelverkehrt zueinander, um die Traverse 105 zu führen, erfolgt die Beschreibung lediglich für einen Bewegungsarm. In Figuren 7 und 8 ist außerdem und lediglich zur Vereinfachung der Darstellung kein Einstellmittel gezeigt.

Die Verstellung der Einstellmittel 30-32 in der vertikalen Richtung V, also in ihrer Höhe, kann stufenweise, z.B. manuell mittels einem Raster, oder stufenlos, z.B. mittels einer elektromotorischen Verstellachse, erfolgen.

In Figur 3 ist das Einstellmittel 30 ebenfalls zweigeteilt 31, 32 ausgeführt, wobei hier eine Ausführung gezeigt ist, bei der das erste Ende des ersten Hebelarms 110 über die erste Antriebseinheit 101 hinaussteht, d.h. die erste Antriebseinheit 101 ist zwischen dem ersten und dem zweiten Ende des ersten Hebelarms 110 angeordnet. Am äußersten Ende des ersten Hebelarms 110 ist ein dritter Hebelarm 131 mit einem ersten Ende davon beweglich verbunden befestigt. Das zweite Ende des dritten Hebelarms 131 ist an einem dritten Befestigungsbereich A3, der wie bereits beschrieben mit dem dritten Hebelarm 131 mechanisch gekoppelt und verfahrbar an der Befestigungseinheit 3 angeordnet ist, befestigt. Am zweiten Ende des dritten Hebelarms 131 ist außerdem ein Federelement 130 mit einem ersten Ende davon angebracht.

Das Federelement 130 ist mit seinem zweiten Ende an einem zweiten Befestigungsbereich A2 der Befestigungseinheit 3 befestigt. Der dritte Hebelarm 131 dient dazu, die Rückstellkraft des Federelements 130 auf den restlichen Teil des Bewegungsarms und die erste Antriebseinheit 101 zu übertragen.

In Figur 4 ist eine Ausführung gezeigt, in der das Federelement als Spiralfeder 132 gebildet ist, die zwischen den beiden Hebelarmen 110 und 120 angeordnet ist. Alternativ kann auch eine in Figuren 1-3 gezeigte mechanische Feder, oder ein in Figur 5 gezeigtes und nachfolgend beschriebenes elektromechanisches Federelement 130 verwendet werden.

In Figur 5 ist eine Ausführung gezeigt, in der das Federelement 130 als elektromechanisches Federelement 130 gebildet, das beispielsweise einen Linearmotor und einen elektrischen Energiespeicher 133 aufweist. Elektrische Energiespeicher 133, z.B. Kondensatoren oder Akkumulatoren, können in Wirkverbindung mit einer mechanischen Vorrichtung als elektromechanisches Federelement 130 eingesetzt werden. Der Linearmotor besteht aus einem Läufer 135, der sich wie ein Schlitten bewegt, und einem feststehenden Stator 134. Es ist bekannt, dass sowohl Läufer 135 als auch Stator 134 mit gegenpoligen Elektromagneten ausgestattet sind. Werden sie bestromt, bewegt sich der Läufer 135 gegenüber dem Stator 134 und eine lineare Bewegung wird erzeugt. Ein Elektromotor oder Linearmotor kann auch umgekehrt als Generator betrieben werden, d.h. durch mechanische Bewegung des Läufers 135 wird elektrische Energie erzeugt, die in dem elektrischen Energiespeicher 133 (Akkumulator, Kondensator) gespeichert werden kann. Zusammen wirken Stator 134, Läufer 135 und elektrischer Energiespeicher 133 in der vorliegenden Erfindung ähnlich einem Federelement und werden daher als elektromechanisches Federelement bezeichnet.

Der Einsatz eines solchen elektromechanischen Federelements 130 an dieser Stelle bringt insgesamt ein großes Energiesparpotential beim Betreiben des Pressen-Transfersystems, da auch bei diesem Ausführungsbeispiel die erste Antriebseinheit 101 unterstützt wird und damit kleiner dimensioniert werden kann. Dieses elektromechanische Federelement 130 kann auch in den in Figuren 2, 3, 4 und 8 gezeigten Ausführungen eingesetzt werden.

In Figuren 7 und 8 ist jeweils eine Ausführung gezeigt, in der ein Umlenkmittel 140 beispielsweise in Form einer Umlenkrolle vorgesehen ist. Das Umlenkmittel 140 ist am zweiten Befestigungsbereich A2 angeordnet. Das Energie speichernde Element 130 ist in diesen Ausführungen aus einem Zugmittel 141, z.B. einem Seil oder einem Riemen, und einem Gewichtselement 142, also einer Masse, gebildet. Das Gewichtselement 142 ist an einem ersten Ende des Zugmittels 141 befestigt. Das zweite Ende des Zugmittels 141 ist an einem vorgegebenen Bereich des Bewegungsarms befestigt, wie bereits für die Ausführung als Federelement 130 beschrieben. Das zweite Ende ist also indirekt über das Umlenkmittel 140 mit dem zweiten Befestigungsbereich A2 verbunden. Vorteilhaft ist das Umlenkmittel 140 eine Umlenkrolle und ist oberhalb des Bewegungsarms angeordnet. Das heißt, dass der zweite Befestigungsbereich A2 auch oberhalb des Bewegungsarms angeordnet ist. Das zweite Ende des Zugmittels 141 ist nahe am zweiten Ende des ersten Hebelarms 110 befestigt. Das Zugmittel 141 wird über das Umlenkmittel 140 umgelenkt, so dass das Gewichtselement 142 entlang der Befestigungseinheit 3, also in einer Vertikalachse V, wirkt. Durch das Umlenkmittel 140 wirkt die Kraft aber nicht in vertikaler Richtung wie bei einem bereits bekannten Gewichtsausgleich, sondern in Bewegungsrichtung der Traverse 105. Die potentielle Energie des Gewichtselements 142, also der Masse, hängt entsprechend von seiner Höhenlage ab, welche wiederum von der Lage des Bewegungsarms während des Bewegungsablaufes abhängt. Fährt der Bewegungsarm aus seiner Ausgangsposition S in die erste Presse 1 ein, wird das Gewichtselement 142 über die Antriebseinheit 101 mit potentieller Energie aufgeladen (weil nach oben gezogen), und unterstützt den Bremsvorgang und somit die Antriebseinheit 101 beim Aufnehmen des Werkstückes 40. Beim Anheben und Beschleunigen des Werkstückes 40 aus dem Werkzeug heraus unterstützt das Gewichtselement 142 ebenfalls die Antriebseinheit 101, indem das maximale Antriebsmoment am Motor reduziert wird. Während des Transports des Werkstückes 40 nach Passieren der Ausgangsposition S in die zweite Presse 2 wird das Gewichtselement 142 wieder angehoben und damit energetisch aufgeladen. Es dient wiederum als Unterstützung beim Abbremsen, um das Werkstück 40 positionsgerecht in Presse 2 ablegen zu können.

Das Prinzip ist dabei also dasselbe wie bei der Verwendung von Federelementen als Energie speicherndes Element 130, wobei in diesen Ausführungen die Speicherung der Energie über die Änderung der Lage und damit der potentiellen Energie des Gewichtselements 142, erfolgt.

In Figur 8 wird das Gewichtselement 142 noch zusätzlich mit einem Federelement 150 kombiniert, das daran mit einem ersten Ende befestigt ist. Mit einem zweiten Ende ist das Federelement 150 an einem an der Befestigungseinheit 3 angeordneten dritten Befestigungsbereich A3 verbunden. Vorteilhaft ist der dritte Befestigungsbereich A3 unterhalb des zweiten Befestigungsbereichs A2 und immer unterhalb des Gewichtselements 142 angeordnet. Das Federelement 150 kann dabei wie das als Energie speichernde Element verwendete Federelement 130 gebildet sein, also als mechanisches Federelement oder pneumatisches Federelement oder elektromechanisches Federelement.

Grundsätzlich sind die in den Figuren gezeigten Varianten lediglich beispielhafte Ausführungen. Es kann jegliche Kombination aus Einstellmittel 30, Hebelarmen 110, 120, Energie speicherndem Element 130, 132 und Befestigungsbereichen A1, A2 verwendet werden. Die Lage der Befestigungsbereiche A1 und A2 untereinander kann außerdem in einigen Ausführungen variieren, d.h. Befestigungsbereich A1 kann sowohl oberhalb als auch unterhalb von Befestigungsbereich A2 liegen.

Die Pressen-Transfereinheit bewegt ein Werkstück 40 mittels den Bewegungsarmen und der Traverse 105 von einer ersten Bearbeitungsstation 1 anhand eines definierten Bewegungsablaufs der Bewegungsarme zu einer zweiten Bearbeitungsstation 2. Nach Ablegen des Werkstücks 40 bewegen sich die Bewegungsarme wieder anhand eines definierten Bewegungsablaufs zurück zur ersten Bearbeitungsstation 1, um ein weiteres Werkstück 40 mittels der Traverse 105 aufzunehmen, oder in die Ausgangsposition S. Die Ansteuerung jeder Pressen-Transfereinheit oder mehrerer aufeinanderfolgender Pressen-Transfereinheiten erfolgt mittels einer Recheneinheit 300, die entweder als separate Recheneinheit 300 in die Steuerung der Pressenanordnung integriert ist oder einer Kombination daraus.

Die Pressen-Transfereinheit ist dafür zuständig, dass das Werkstück 40 positionsgenau und lagegerecht auf dem Unterwerkzeug 13; 23 platziert wird, damit die Bearbeitung korrekt erfolgen kann. Da es nötig ist, einen bestimmten Durchsatz an Werkstücken 40 bereitzustellen, müssen die Pressen-Transfereinheit und die Stößel 11; 21 entsprechend bewegt werden, so dass die Bewegungen von Pressen-Transfereinheit und Stößel 11; 21 sehr dynamisch sind. Dabei muss sichergestellt werden, dass keine Kollision zwischen Pressen-Transfereinheit bzw. den Komponenten davon und den Stößeln 11; 21 erfolgt. Im kollisionskritischen Bereich ist die Positionsgenauigkeit des Werkstücks 40 bzw. der Traverse 105 ausschlaggebend. Die Antriebseinheiten 101, 102 und ggf. der Schwenkantrieb 103 werden entsprechend angesteuert. Ziel dabei ist es, eine maximale Produktionshubzahl zu erreichen. Im kollisionsfreien Bereich spielt die Positionsgenauigkeit eine geringe Rolle, hier steht die Entlastung der Antriebseinheiten 101, 102 im Vordergrund, so dass die Antriebseinheiten 101, 102 und ggf. der Schwenkantrieb 103 so angesteuert werden, dass die darauf wirkenden Momente minimal sind. Dies wird durch das vorgeschlagene Energie speichernde Element 130, 132 in den diversen Ausführungen unterstützt, indem es im kollisionskritischen Bereich die erste Antriebseinheit 101 sowohl durch Freigabe der im Energie speichernden Element 130, 132 gespeicherten Energie beim Entfernen des Werkstücks 40 bzw. Ausfahren aus der Bearbeitungsstation 1, 2, als auch durch Aufladen des Energie speichernden Elements beim Ablegen des Werkstücks 40 in der nächsten Bearbeitungsstation 1, 2 bzw. beim Einfahren unterstützt, wie nachfolgend detailliert anhand des in Figur 9 gezeigten Diagramms besch rieben.

Figur 9 zeigt beispielhaft einen schematischen Energieverlauf des in Figur 1 gezeigten, als mechanische Zugfeder ausgeführten, Federelements 130 über einen gesamten Bewegungsablauf der Pressen-Transfereinheit. Auf der horizontalen Achse T ist die Zeit abgebildet. Die vertikale Achse E stellt einen qualitativen Wert der gespeicherten Energie des Federelementes 130 dar, welche im Fall eines mechanischen Federelementes 130 eine Spannenergie ist. Der Bewegungsablauf startet auf der Zeitachse T mit der Ausgangsposition S, und wird fortgesetzt mit der ersten Position P1, in der das Werkstück 40 aufgenommen wird. Anschließend fährt die Pressen-Transfereinheit mit dem Werkstück 40 in die zweite Position P2, wobei die dabei die Ausgangsposition S passiert. In der zweiten Position P2, d.h. der nachfolgenden Bearbeitungsstation 2, wird das Werkstück 40 abgelegt und die Pressen-Transfereinheit fährt zurück zur Ausgangsposition S. Damit ist ein Bewegungszyklus abgeschlossen und kann von neuem starten.

Auf der vertikalen Energieachse E ist dargestellt, wie in der Ausgangsposition S das Federelement 130 eine minimale Energie aufweist. Die gespeicherte Energie im Federelement 130 steigt auf ein Maximum, während die Pressen-Transfereinheit in die erste Position P1 fährt. Beim Herausfahren aus der ersten Position P1 in die Ausgangsposition S wird die aufgenommene Energie wieder abgegeben, sinkt also wieder auf ein Minimum. Beim Weiterfahren in die zweite Position P2 steigt die gespeicherte Energie des Federelementes 130 wieder auf ein Maximum, d.h. die Feder wird wieder gespannt, um anschließend beim Rückweg aus der zweiten Position P2 in die Ausgangsposition S die aufgenommene Energie wieder abzugeben.

Beim Einfahren in die kollisionskritischen Bereiche und beim Ausfahren aus den kollisionskritischen Bereichen, in denen sich die erste und zweite Position P1 und P2 befinden, sind durch starkes Abbremsen und starkes Beschleunigen der Traverse 105 hohe Antriebs- und Bremsmomente der Antriebe 101 und 102 erforderlich. Im nicht-kollisionskritischen Bereich um die Ausgangsposition S herum sind keine hohen Antriebs- und Bremsmomente erforderlich.

Zeitlich betrachtet wird das Energie speichernde Element 130, 132 in allen Ausführungen bis zum Erreichen der Position P1 bzw. P2 langsam energetisch aufgeladen, um nach Verlassen der Position P1 bzw. P2 schnell Energie abzugeben. Dies setzt insgesamt, d.h. über einen ganzen Bewegungsablauf betrachtet, die erforderliche Energiemenge zum Bewegen der Bewegungsarme einerseits durch Beschleunigen und andererseits durch Abbremsen der Bewegungsarme herab. Somit wird direkt eine Energieeinsparung erreicht. Weil außerdem die maximalen Antriebsmomente reduziert werden, sind kleinere Antriebseinheiten 101, 102 mit geringerem Eigengewicht einsetzbar, wodurch wiederum kleine Antriebsmomente und weniger Energie zum Betreiben der Presse 1, 2 erforderlich sind. Somit ist indirekt ebenfalls eine Energieeinsparung realisiert.

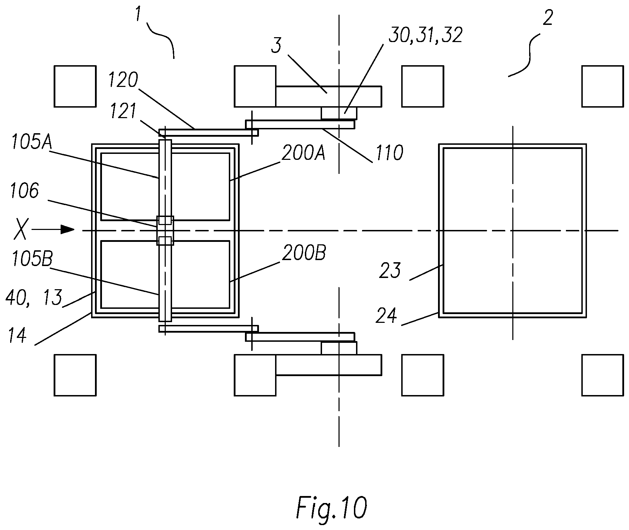

In einer weiteren, in Figur 10 schematisch dargestellten Ausführung, ist vorgesehen, dass die Traverse 105 aus zwei Teiltraversen 105A, 105B besteht, die über eine Kopplungsstelle 106 miteinander verbindbar sind. Ebenso kann im Falle einer geteilten Traverse 105 das daran befestigte Tooling 200 in zwei Teil-Toolings 200A, 200B geteilt sein. Die Traverse 105 weist mindestens an einer ihrer Verbindungsstellen, z.B. der Verbindung 121 am zweiten Hebelarm 120, zu anderen Komponenten der Presse einen Längenausgleich auf. Dieser kann im Falle der geteilten Traverse 105 auch alternativ an der Kopplungsstelle 106 vorgesehen sein.

Die Teiltraversen 105A, 105B können über die Kopplungsstelle 106 manuell oder automatisiert, z.B. für einen automatischen Werkzeugwechsel, miteinander verbunden oder entkoppelt werden. Die Kopplungsstelle 106 liegt vorzugweise in der Mitte der Traverse 105, so dass die Teiltraversen 105A, 105B im Wesentlichen dieselbe Länge aufweisen. Das an der Traverse 105 befestigte Tooling 200 zur Aufnahme der Werkstücke 40 kann ebenfalls geteilt ausgeführt werden, so dass dann mindestens zwei Teil-Toolings 200A, 200B vorhanden sind. Bei einer automatisierten Kopplungsstelle der Traverse 105 ist es erforderlich, dass das Tooling 200 entsprechend der Kopplungsstelle 106 ebenfalls geteilt ausgeführt wird.

Sind die beiden Teiltraversen 105A, 105B entkoppelt, z.B. für einen Werkzeugwechsel oder für einen Betrieb mit unterschiedlichem Bewegungsablauf, muss eine Fixierung der beweglichen Verbindung zwischen dem zweiten Hebelarm 120 und der Traverse 105 erfolgen.

Die Kopplungsstelle 106 kann starr, oder gelenkig, oder mit Längenausgleich oder gelenkig mit Längenausgleich ausgebildet sein. Ist die Kopplungsstelle 106 gelenkig, mit Längenausgleich oder gelenkig mit Längenausgleich ausgeführt, so ist das Tooling 200 auch entsprechend geteilt auszuführen.

In der bereits erwähnten DE 10 2006 037 365 B4 ist zwar eine geteilte Traverse vorhanden. Die beiden Traversenteile sind aber stets miteinander verbunden und zueinander in verschiedenen Richtungen verstellbar, um bei Mehrfachwerkzeugen für Mehrfachteile entsprechende Lageanpassungen des Toolings aufgrund unterschiedlicher Werkzeugausführungen zu ermöglichen.

Im Gegensatz dazu sind gemäß der Erfindung zwei voneinander abkoppelbare Traversenteile 105A, 105B vorgesehen, die es ermöglichen, dass lediglich ein Bewegungsarm betätigt wird. Dies kann vorteilhaft sein, um den Werkzeugwechselvorgang zu optimieren oder wenn die beiden sich gegenüberliegenden Bewegungsarme unabhängig voneinander (mit unterschiedlichem Bewegungsablauf) bewegt werden müssen, wenn z.B. Lageveränderungen des Werkstückes für den Bearbeitungsprozess oder während des Transportweges erforderlich sind.

In einer weiteren Ausführung wird nur einer der Bewegungsarme aus einer Pressen-Transfereinheit betrieben. Hierfür wird die Traverse 105 an der Kopplungsstelle 106 geteilt, so dass die Bewegungsarme nicht mehr miteinander verbunden sind. Die Ausführung ist für kleinere Werkstücke 40, d.h. bei geringeren zu bewegenden Massen, geringeren Transportwegen etc., anwendbar.

Bei einer weiteren Ausführung des einseitigen Betriebes können zwei Bewegungsarme hintereinander in Transportrichtung X für den Transport von einem gemeinsam aufgenommenen Werkstück 40 verwendet bzw. vorgesehen werden. Das heißt, dass hinter oder vor dem Bewegungsarm ein weiterer Bewegungsarm betrieben wird, der diesen beim Transport des Werkstücks 40 unterstützt. Während des gemeinsamen Transports des Werkstücks 40 müssen die beiden Bewegungsarme mit demselben Bewegungsablauf betrieben werden, hingegen ohne das Werkstück 40 können sie unabhängig voneinander betrieben werden, um den gesamten Transferablauf zu optimieren.

### Bezugszeichenliste

- 1; 2: Bearbeitungsstation, Presse
- 11; 21: Stößel
- 12; 22: Oberwerkzeug
- 13; 23: Unterwerkzeug, liegt auf 14 auf
- 14; 24: Pressentisch
- 3: Befestigungseinheit
- 30-32: Einstellmittel
- 101: erste Antriebseinheit
- 102: zweite Antriebseinheit
- 103: Schwenkantrieb
- 104: Umlenkvorrichtung
- 105: Traverse
- 105A, 105B: Teiltraversen
- 106: Kopplungsstelle
- 110: erster Hebelarm bzw. Kurbel
- 120: zweiter Hebelarm bzw. Schwinge
- 121: Verbindung am zweiten Hebelarm 120
- 131: dritter Hebelarm
- 130, 132: Energie speicherndes Element
- 133: elektrischer Energiespeicher
- 134, 135: Stator, Läufer des Linearmotors
- 140: Umlenkmittel
- 141: Zugmittel
- 142: Gewichtselement
- 150: Federelement
- 200: Tooling
- 200A, 200B: Teil-Tooling
- 300: Steuereinheit
- 40: Werkstück
- V: Vertikalachse
- A1, A2: erster Befestigungsbereich, zweiter Befestigungsbereich
- A3: dritter Befestigungsbereich
- M12: Stufenabstand / Abstand der Bearbeitungsstationen
- X: Transportrichtung bzw. Durchlaufrichtung bzw. Bewegungsrichtung
- E: vertikale Achse, Energie eines Federelementes, Spannenergie
- T: horizontale Achse, Zeitachse
- P1, P2: erste/zweite Position
- S: Ausgangsposition

## Patentansprüche

1. Transfersystem für Pressen, aufweisend
a) mindestens zwei einander gegenüberliegend angeordnete Befestigungseinheiten (3), wobei jede der Befestigungseinheiten (3) jeweils einen ersten Befestigungsbereich (A1) aufweist, sowie
b) eine Pressen-Transfereinheit, bestehend aus zwei einander gegenüberliegend angeordneten Bewegungsarmen, sowie einer damit verbundenen Traverse (105) zur Aufnahme und zum Transport eines Werkstücks (40),
wobei jeder der Bewegungsarme eine erste, an dem ersten Befestigungsbereich (A1) befestigte Antriebseinheit (101), einen ersten Hebelarm (110), eine zweite Antriebseinheit (102) und einen zweiten Hebelarm (120) aufweist, wobei
der erste Hebelarm (110) an einem ersten Ende davon oder zwischen dem ersten und einem zweiten Ende mit der ersten Antriebseinheit (101) und an dem zweiten Ende davon mit der zweiten Antriebseinheit (102) verbunden ist, und wobei der zweite Hebelarm (120) an einem ersten Ende davon mit der zweiten Antriebseinheit (102) drehbar verbunden ist, und mit einem zweiten Ende davon mit der Traverse (105) beweglich verbunden ist, und
c) mindestens ein Energie speicherndes Element (130; 132) je Bewegungsarm, das derart gebildet und angeordnet ist, dass seine Kraft oder eine Kraftkomponente davon in Beschleunigungsrichtung der Traverse mit oder ohne Werkstück (40) weist, wobei
c1) ein zweiter Befestigungsbereich (A2) an der Befestigungseinheit (3) vorgesehen ist, und das Energie speichernde Element (130) ist mit einem ersten Ende davon direkt oder indirekt mit dem zweiten Befestigungsbereich (A2) verbunden und an einem zweiten Ende davon an einem vorgegebenen Bereich des Bewegungsarms befestigt, und/oder
c2) das Energie speichernde Element (132) mit einem ersten Ende am ersten Hebelarm (110) und mit einem zweiten Ende am zweiten Hebelarm (120) befestigt ist,
**dadurch gekennzeichnet, dass**
die Bewegungsarme eine Ausgangsposition (S) aufweisen, in welcher zumindest der erste Hebelarm (110) nahezu in einer Vertikalachse (V) steht, und durch einen vorgegebenen Bewegungsablauf von der Ausgangsposition (S) in eine erste Position (P1) und durch Passieren der Ausgangsposition (S) in eine zweite Position (P2) und zurück bewegt werden, und wobei
- das Energie speichernde Element (130; 132) derart ausgelegt ist, dass es in der Ausgangsposition (S) eine minimale gespeicherte Energie aufweist, und
in einer Bewegungsphase zwischen Ausgangsposition (S) und erster Position (P1) und/oder zwischen Ausgangsposition (S) und zweiter Position (P2) jeweils bis zu einem vorgegebenen Grad energetisch aufgeladen wird, und
in einer Bewegungsphase zwischen zweiter Position (P2) und Ausgangsposition (S) und/oder zwischen erster Position (P1) und Ausgangsposition (S) die gespeicherte Energie abgibt.

2. Transfersystem nach Anspruch 1, wobei in der ersten Position (P1) ein Werkstück (40) mittels der Traverse (105) aufgenommen wird und in der zweiten Position (P2) abgelegt wird.

3. Transfersystem nach einem der vorhergehenden Ansprüche, ferner aufweisend einen derart am Bewegungsarm angeordneten Schwenkantrieb (103), dass er die Traverse (105) um ihre Längsachse oder nahe ihrer Längsachse rotieren kann.

4. Transfersystem nach Anspruch 3, wobei der Schwenkantrieb (103) in Kombination mit einer mechanischen Umlenkvorrichtung vorgesehen ist, die dazu eingerichtet ist, die Traverse (105) in horizontaler Lage zu halten.

5. Transfersystem nach einem der vorhergehenden Ansprüche, wobei die erste Antriebseinheit (101) zwischen dem ersten und dem zweiten Ende des ersten Hebelarms (110) angeordnet ist und das Energie speichernde Element (130) mit dem ersten Ende verbunden ist.

6. Transfersystem nach einem der Ansprüche 1 bis 4, wobei die erste Antriebseinheit (101) zwischen dem ersten und dem zweiten Ende des ersten Hebelarms (110) angeordnet ist und ein dritter Hebelarm (131) vorgesehen ist, der mit einem ersten Ende davon an dem ersten Ende des ersten Hebelarms (110) drehbar befestigt und mit einem zweiten Ende davon an einem dritten, an der Befestigungseinheit (3) vorgesehenen, in vertikaler Richtung (V) verschiebbaren Befestigungsbereich (A3) befestigt ist, und wobei das Energie speichernde Element (130) mit diesem zweiten Ende verbunden ist.

7. Transfersystem nach einem der vorhergehenden Ansprüche, wobei das Energie speichernde Element (130, 132) als mechanisches Federelement oder pneumatisches Federelement oder elektromechanisches Federelement gebildet ist.

8. Transfersystem nach einem der Ansprüche 1 bis 4, wobei im Falle c1) ein Umlenkmittel (140) an dem zweiten Befestigungsbereich (A2) vorgesehen ist, und das Energie speichernde Element (130) ein Zugmittel (141) und ein Gewichtselement (142) aufweist, das an einem ersten Ende des Zugmittels (141) befestigt ist, und wobei das zweite Ende des Zugmittels (141) an dem vorgegebenen Bereich des Bewegungsarms befestigt ist, und wobei das Zugmittel (141) über das Umlenkmittel (140) geführt ist.

9. Transfersystem nach Anspruch 8, wobei ein dritter, an der Befestigungseinheit (3) angeordneter, Befestigungsbereich (A3) sowie ein Federelement (150) vorgesehen sind, wobei das Federelement (150) mit einem ersten Ende an dem Gewichtselement (142) und mit seinem zweiten Ende an dem dritten Befestigungsbereich (A3) befestigt ist.

10. Transfersystem nach Anspruch 9, wobei das Federelement (150) als mechanisches Federelement oder pneumatisches Federelement oder elektromechanisches Federelement gebildet ist.

11. Transfersystem nach einem der vorhergehenden Ansprüche, wobei ferner mindestens ein an der Befestigungseinheit (3) angeordnetes Einstellmittel (30; 31, 32) vorgesehen ist, an dem die ersten und zweiten Befestigungsbereiche (A1; A2) angeordnet sind, wobei zumindest eines der Einstellmittel (30; 31, 32) in seiner Höhe entlang einer Vertikalachse (V) verschiebbar ist.

12. Transfersystem nach Anspruch 11, wobei jedes Einstellmittel (30; 31, 32) und/oder der dritte Befestigungsbereich (A3) als ein geführter Schlitten gebildet ist.

13. Transfersystem nach Anspruch 11 oder 12, wobei
- das Einstellmittel (30) einteilig derart gebildet ist, dass die ersten und zweiten Befestigungsbereiche (A1; A2) daran in einem vorgegebenen Abstand voneinander angeordnet sind, oder
- das Einstellmittel (31, 32) mehrteilig derart gebildet ist, dass jeweils einer der ersten und zweiten Befestigungsbereiche (A1; A2) an einem der Einstellmittel (31, 32) angeordnet ist, wobei jedes Einstellmittel (31, 32) individuell verstellbar ist.

14. Transfersystem nach einem der vorhergehenden Ansprüche, wobei der erste und/oder der zweite Hebelarm (110, 120) in ihrer Länge einstellbar gebildet sind.

15. Transfersystem nach einem der Ansprüche 1 bis 13, wobei der erste und/oder der zweite Hebelarm (110, 120) in ihrer Länge dynamisch veränderbar gebildet sind.

16. Transfersystem nach einem der vorhergehenden Ansprüche, wobei der erste und der zweite Hebelarm (110, 120) dieselbe oder voneinander verschiedene Längen aufweisen.

17. Transfersystem nach einem der vorhergehenden Ansprüche, wobei die Traverse (105) einen Längenausgleich an einem ihrer beiden Enden der aufweist.

18. Transfersystem nach einem der vorhergehenden Ansprüche, wobei die Traverse (105) aus zwei miteinander an einer Kopplungsstelle (106) miteinander koppelbaren Teiltraversen (105A, 105B) besteht.

19. Transfersystem nach Anspruch 18, wobei ein an der Traverse (105) befestigtes Tooling (200) entsprechend der Kopplungsstelle (106) geteilt ist.

20. Transfersystem nach Anspruch 18 oder 19, wobei die Kopplungsstelle (106) starr oder gelenkig oder mit Längenausgleich oder gelenkig mit Längenausgleich ausgebildet ist.

21. Transfersystem nach Anspruch 18, 19 oder 20, wobei im Fall, dass die Teiltraversen (105A, 105B) voneinander entkoppelt sind, nur einer der Bewegungsarme einer Pressen-Transfereinheit betrieben wird.

22. Transfersystem nach Anspruch 21, wobei ein weiterer Bewegungsarm in Transportrichtung (X) hinter oder vor dem Bewegungsarm, der betrieben wird, vorgesehen ist und zum gemeinsamen Transport eines Werkstückes (40) mit demselben Bewegungsablauf dazu betrieben wird und ansonsten unabhängig dazu betreibbar ist.

23. Presse (1, 2), aufweisend ein Pressen-Transfersystem nach einem der vorhergehenden Ansprüche, wobei die Befestigungseinheiten (3) am Pressengestell der Presse angebracht sind.

24. Presse (1, 2), aufweisend ein Pressen-Transfersystem nach einem der Ansprüche 1 bis 22, sowie ein von der Presse (1, 2) freistehendes Gestell, an dem die Befestigungseinheiten (3) angebracht sind.

25. Pressenanordnung, aufweisend mehrere, derart hintereinander und in einer vorgegebenen Bearbeitungsrichtung (X) angeordnete Pressen (1, 2) nach Anspruch 23 oder 24, dass ein Werkstück (40) von einer ersten bis zu einer letzten Presse (1, 2) mittels der Bewegungsarme transferiert werden kann.

26. Pressenanordnung nach Anspruch 25, wobei jeweils ein Pressen-Transfersystem mittig zwischen zwei aufeinanderfolgenden Pressen (1, 2) angeordnet ist.

27. Pressenanordnung nach Anspruch 25 oder 26, wobei
- die erste der Pressen (1) der Pressenanordnung zwei zusätzliche, einander gegenüberliegend angeordnete Befestigungseinheiten (3) aufweist, die an der Seite der ersten Presse (1) angeordnet sind, von der die Werkstücke (40) erstmalig der Pressenanordnung zur Bearbeitung zugeführt werden, und/oder
- die letzte der Pressen (2) zwei zusätzliche, einander gegenüberliegend angeordnete Befestigungseinheiten (3) aufweist, die an der Seite der letzten Presse (2) angeordnet sind, von der sie nach letztmaliger Bearbeitung aus der Pressenanordnung entfernt werden.

## Claims

1. A transfer system for presses, having
a) at least two fastening units (3) arranged opposite one another, wherein each of the fastening units (3) in each case has a first fastening region (A1), as well as
b) a press transfer unit, consisting of two movement arms arranged opposite one another, as well as a crossbar (105) connected thereto for receiving and for transporting a workpiece (40),
wherein each of the movement arms has a first drive unit (101) connected to the first fastening region (A1), a first lever arm (110), a second drive unit (102), and a second lever arm (120), wherein
the first lever arm (110) is connected at a first end thereof or between the first and a second end to the first drive unit (101), and at the second end thereof to the second drive unit (102), and wherein the second lever arm (120) is rotatably connected at a first end thereof to the second drive unit (102), and is movably connected with a second end thereof to the crossbar (105), and
c) at least one energy-storing element (130; 132) for each movement arm, which energy-storing element is formed and arranged in such a way that its force or a force component thereof points in the acceleration direction of the crossbar with or without workpiece (40), wherein
c1) a second fastening region (A2) is provided on the fastening unit (3), and the energy-storing element (130) is connected directly or indirectly with a first end thereof to the second fastening region (A2), and is fastened on a second end thereof at a specified region of the movement arm, and/or
c2) the energy-storing element (132) is fastened with a first end to the first lever arm (110) and with a second end thereof to the second lever arm (120), **characterized in that** the movement arms have an initial position (S), in which at least the first lever arm (110) stands virtually in a vertical axis (V), and are moved from the initial position (S) into a first position (P1) by means of a specified motion sequence, and are moved back into a second position (P2) and back by passing the initial position (S), and wherein
the energy-storing element (130; 132) is designed in such a way that it has a minimally stored energy in the initial position (S), and is charged with energy to a specified degree in a movement phase between initial position (S) and first position (P1) and/or between initial position (S) and second position (P2), and
outputs the stored energy in a movement phase between second position (P2) and initial position (S) and/or between first position (P1) and initial position (S).

2. The transfer system according to claim 1, wherein a workpiece (40) is received by means of the crossbar (105) in the first position (P1) and is set down in the second position (P2).

3. The transfer system according to one of the preceding claims, further having a pivot drive (103), which is arranged on the movement arm in such a way that it can rotate the crossbar (105) about its longitudinal axis or close to its longitudinal axis.

4. The transfer system according to claim 5, wherein the pivot drive (103) is provided in combination with a mechanical deflection device, which is configured to hold the crossbar (105) in the horizontal position.

5. The transfer system according to one of the preceding claims, wherein the first drive unit (101) is arranged between the first and the second end of the first lever arm (110), and the energy-storing element (130) is connected to the first end.

6. The transfer system according to one of claims 1 to 4, wherein the first drive unit (101) is arranged between the first and the second end of the first lever arm (110), and a third lever arm (131) is provided, which is rotatably fastened with a first end thereof to the first end of the first lever arm (110), and with a second end thereof to a third fastening region (A3), which is provided on the fastening unit (3) and which can be shifted in the vertical direction (V), and wherein the energy-storing element (130) is connected to this second end.

7. The transfer system according to one of the preceding claims, wherein the energy-storing element (130, 132) is formed as mechanical spring element or pneumatic spring element or electromechanical spring element.

8. The transfer system according to one of claims 1 to 4, wherein in the case c1) a deflection means (140) is provided on the second fastening region (A2), and the energy-storing element (130) has a pulling means (141) and a weight element (142), which is fastened to a first end of the pulling means (141), and wherein the second end of the pulling means (141) is fastened to the specified region of the movement arm, and wherein the pulling means (141) is guided via the deflection means (140).

9. The transfer system according to claim 8, wherein a third fastening region (A3) arranged on the fastening unit (3) as well as a spring element (150) are provided, wherein the spring element (150) is fastened with a first end to the weight element (142) and with its second end to the third fastening region (A3).

10. The transfer system according to claim 9, wherein the spring element (150) is formed as mechanical spring element or pneumatic spring element or electromechanical spring element.

11. The transfer system according to one of the preceding claims, wherein at least one setting means (30; 31, 32), which is arranged on the fastening unit (3), is further provided, on which the first and second fastening regions (A1; A2) are arranged, wherein at least one of the setting means (30; 31, 32) can be shifted in its height along a vertical axis (V).

12. The transfer system according to claim 11, wherein each setting means (30; 31, 32) and/or the third fastening region (A3) is formed as a guided carriage.

13. The transfer system according to claim 11 or 12, wherein
- the setting means (30) is formed in one piece in such a way that the first and second fastening regions (A1; A2) are arranged thereon at a specified distance from one another, or
- the setting means (31, 32) is formed in several pieces in such a way that a respective one of the first and second fastening regions (A1; A2) is arranged on one of the setting means (31, 32), wherein each setting means (31, 32) can be adjusted individually.

14. The transfer system according to one of the preceding claims, wherein the first and/or the second lever arm (110, 120) are formed so that the length thereof can be set.

15. The transfer system according to one of claims 1 to 13, wherein the first and/or the second lever arm (110, 120) are formed so that the length thereof can be changed dynamically.

16. The transfer system according to one of the preceding claims, wherein the first and the second lever arm (110, 120) have lengths, which are identical or different from one another.

17. The transfer system according to one of the preceding claims, wherein the crossbar (105) has a length compensation on one of its two ends.

18. The transfer system according to one of the preceding claims, wherein the crossbar (105) consists of two partial crossbars (105A, 105B), which can be coupled to one another at a coupling point (106).

19. The transfer system according to claim 18, wherein a tooling (200) fastened to the crossbar (105) is divided according to the coupling point (106).

20. The transfer system according to claim 18 or 19, wherein the coupling point (106) is formed rigidly or in an articulated manner or with length compensation or in an articulated manner with length compensation.

21. The transfer system according to claim 18, 19, or 20, wherein in the event that the partial crossbars (105A, 105B) are uncoupled from one another, only one of the movement arms of a press transfer unit is operated.

22. The transfer system according to claim 21, wherein a further movement arm is provided in the transport direction (X) downstream from or upstream of the movement arm, which is operated, and for the joint transport of a workpiece (40) is operated with the same motion sequence thereto, and can otherwise be operated independently thereof.

23. A press (1, 2), having a press transfer system according to one of the preceding claims, wherein the fastening units (3) are attached to the press frame of the press.

24. A press (1, 2), having a press transfer system according to one of claims 1 to 22, as well as a frame, which is detached from the press (1, 2) and to which the fastening units (3) are attached.

25. A press assembly, having several presses (1, 2) according to claim 23 or 24, which are arranged one behind the other and in a specified machining direction (X) in such a way that a workpiece (40) can be transferred from a first all the way to a last press (1, 2) by means of the movement arms.

26. The press assembly according to claim 25, wherein a press transfer system is in each case arranged centrally between two consecutive presses (1, 2).

27. The press assembly according to claim 25 or 26, wherein
- the first one of the presses (1) of the press assembly has two additional fastening units (3), which are arranged opposite one another, which are arranged on the side of the first press (1), from which the workpieces (40) are fed to the press assembly for the first time for machining purposes, and/or
- the last one of the presses (2) has two additional fastening units (3), which are arranged opposite one another, which are arranged on the side of the last press (2), from which they are removed from the press assembly after the last machining.

## Revendications

1. Système de transfert pour presses, comportant
a) au moins deux unités de fixation (3) disposées opposées l'une à l'autre, sachant que chacune des unités de fixation (3) comporte respectivement une première zone de fixation (A1), et
b) une unité de transfert de presse composée de deux bras de déplacement disposés opposés l'un à l'autre, ainsi qu'une traverse (105) reliée à ceux-ci pour recevoir et transporter une pièce (40),
sachant que chacun des bras de déplacement comporte une première unité d'entraînement (101) fixée à la première zone de fixation (A1), un premier bras de levier (110), une deuxième unité d'entraînement (102) et un deuxième bras de levier (120), sachant que
le premier bras de levier (110) est relié avec une première extrémité de celui-ci ou entre la première extrémité et une deuxième extrémité à la première unité d'entraînement (101) et à la deuxième extrémité de celui-ci à la deuxième unité d'entraînement (102) et sachant que le deuxième bras de levier (120) est relié pouvant tourner avec une première extrémité de celui-ci à la deuxième unité d'entraînement (102) et est relié de façon mobile avec une deuxième extrémité de celui-ci à la traverse (105) et
c) au moins un élément accumulant l'énergie (130,132) pour chaque bras de déplacement, qui est formé et disposé de telle manière que sa force ou un composant de force de celui-ci est dirigé en direction d'accélération de la traverse avec ou sans pièce (40),
sachant que
c1) une deuxième zone de fixation (A2) est prévue sur l'unité de fixation (3) et l'élément accumulant l'énergie (130) est relié avec une première extrémité de celui-ci directement ou indirectement à la deuxième zone de fixation (A2) et est fixé à une deuxième extrémité de celui-ci à une zone prédéfinie du bras de déplacement, et/ou
c2) l'élément accumulant l'énergie (132) est fixé avec une première extrémité au premier bras de levier (110) et avec une deuxième extrémité au deuxième bras de levier (120),
**caractérisé en ce que,**
les bras de déplacement comportent une position initiale (S) dans laquelle au moins le premier bras de levier (110) se trouve à peu près dans un axe vertical (V) et sont déplacés par un cycle de déplacement prédéfini de la position initiale (S) à une première position (P1) et après avoir passé la position initiale (S) à une deuxième position (P2) et retour et sachant que
- l'élément accumulant l'énergie (130, 132) est conçu de telle manière qu'il comporte une énergie accumulée minimale dans la position initiale (S), et
dans une phase de déplacement entre la position initiale (S) et une première position (P1) et/ou entre une position initiale (S) et une deuxième position (P2) est respectivement chargé du point de vue énergétique jusqu'à un degré prédéfini, et délivre l'énergie accumulée dans une phase de déplacement entre une deuxième position (P2) et une position initiale (S) et/ou entre une première position (P1) et une position initiale (S).

2. Système de transfert selon la revendication 1, sachant que dans la première position (P1), une pièce (40) est réceptionnée au moyen de la traverse (105) et est déposée dans la deuxième position (P2).

3. Système de transfert selon l'une quelconque des revendications précédentes, comportant en plus un entraînement pivotant (103) disposé sur le bras de déplacement de telle manière qu'il peut faire tourner la traverse (105) autour de son axe longitudinal ou près de son axe longitudinal.

4. Système de transfert selon la revendication 3, sachant que l'entraînement pivotant (103) est prévu en combinaison avec un dispositif de renvoi mécanique, qui est agencé pour maintenir la traverse (105) en position horizontale.

5. Système de transfert selon l'une quelconque des revendications précédentes, sachant que la première unité d'entraînement (101) est disposée entre la première et la deuxième extrémité du premier bras de levier (110) et l'élément accumulant l'énergie (130) est relié à la première extrémité.

6. Système de transfert selon l'une quelconque des revendications 1 à 4, sachant que la première unité d'entraînement (101) est disposée entre la première et la deuxième extrémité du premier bras de levier (110) et un troisième bras de levier (131) est prévu, qui est fixé pouvant tourner avec une première extrémité de celui-ci sur la première extrémité du premier bras de levier (110) et est fixé avec une deuxième extrémité de celui-ci à une troisième zone de fixation (A3) prévue sur l'unité de fixation (3), déplaçable en direction verticale (V) et sachant que l'élément accumulant l'énergie (130) est relié à cette deuxième extrémité.

7. Système de transfert selon l'une quelconque des revendications précédentes, sachant que l'élément accumulant l'énergie (130, 132) est formé sous la forme d'un élément à ressort mécanique ou d'un élément à ressort pneumatique ou d'un élément à ressort électromécanique.

8. Système de transfert selon l'une quelconque des revendications 1 à 4, sachant que dans le cas c1) un moyen de renvoi (140) est prévu sur la deuxième zone de fixation (A2) et l'élément accumulant l'énergie (130) comporte un moyen de traction (141) et un élément de poids (142), qui est fixé à une première extrémité du moyen de traction (141) et sachant que la deuxième extrémité du moyen de traction (141) est fixée à la zone prédéfinie du bras de déplacement et sachant que le moyen de traction (141) est guidé par le biais du moyen de renvoi (140).

9. Système de transfert selon la revendication 8, sachant qu'une troisième zone de fixation (A3) disposée sur l'unité de fixation (3) ainsi qu'un élément à ressort (150) sont prévus, sachant que l'élément à ressort (150) est fixé avec une première extrémité à l'élément de poids (142) et avec sa deuxième extrémité à la troisième zone de fixation (A3).

10. Système de transfert selon la revendication 9, sachant que l'élément à ressort (150) est formé sous la forme d'un élément à ressort mécanique ou d'un élément à ressort pneumatique ou d'un élément à ressort électromécanique.

11. Système de transfert selon l'une quelconque des revendications précédentes, sachant en plus qu'au moins un moyen de réglage (30, 31, 32) disposé sur l'unité de fixation (3) est prévu sur lequel sont disposées les premières et deuxièmes zones de fixation (A1, A2), sachant qu'au moins un des moyens de réglage (30, 31, 32) peut être déplacé dans sa hauteur le long d'un axe vertical (V).

12. Système de transfert selon la revendication 11, sachant que chaque moyen de réglage (30, 31, 32) et/ou la troisième zone de fixation (A3) est constitué(e) sous la forme d'un chariot guidé.

13. Système de transfert selon la revendication 11 ou 12, sachant que
- le moyen de réglage (30) est formé d'une seule pièce de telle manière que les premières et deuxièmes zones de fixation (A1, A2) y sont disposées à une distance prédéfinie les unes des autres, ou
- le moyen de réglage (31, 32) est formé en plusieurs pièces de telle manière qu'une des premières et deuxièmes zones de fixation (A1, A2) est respectivement disposée sur un des moyens de réglage (31, 32), sachant que chaque moyen de réglage (31, 32) peut être déplacé individuellement.

14. Système de transfert selon l'une quelconque des revendications précédentes, sachant que le premier et le deuxième bras de levier (110, 120) sont formés pouvant être réglés dans leur longueur.

15. Système de transfert selon l'une quelconque des revendications 1 à 13, sachant que le premier et/ou le deuxième bras de levier (110, 120) sont formés pouvant être modifiés de façon dynamique dans leur longueur.

16. Système de transfert selon l'une quelconque des revendications précédentes, sachant que le premier et le deuxième bras de levier (110, 120) comportent les mêmes longueurs ou des longueurs différentes les unes des autres.

17. Système de transfert selon l'une quelconque des revendications précédentes, sachant que la traverse (105) comporte une compensation de longueur à une de ses deux extrémités.

18. Système de transfert selon l'une quelconque des revendications précédentes, sachant que la traverse (105) est composée de deux traverses partielles (105A, 105B) pouvant être couplées entre elles l'une et l'autre à un point d'accouplement (106).

19. Système de transfert selon la revendication 18, sachant qu'un outillage (200) fixé à la traverse (105) est partagé selon le point d'accouplement (106).

20. Système de transfert selon la revendication 18 ou 19, sachant que le point d'accouplement (106) est constitué rigide ou articulé ou avec compensation de longueur ou articulé avec compensation de longueur.

21. Système de transfert selon la revendication 18, 19 ou 20, sachant qu'au cas où les traverses partielles (105A, 105B) sont découplées les unes des autres, seul un des bras de déplacement d'une unité de transfert de presse est actionné.

22. Système de transfert selon la revendication 21, sachant qu'un autre bras de déplacement est prévu en direction de transport (X) derrière ou devant le bras de déplacement, qui est actionné et est actionné à cet effet pour le transport commun d'une pièce (40) avec le même cycle de déplacement et peut être sinon actionné à cet effet de façon indépendante.

23. Presse (1, 2) comportant un système de transfert de presse selon l'une quelconque des revendications précédentes, sachant que les unités de fixation (3) sont montées sur le bâti de presse de la presse.

24. Presse (1, 2) comportant un système de transfert de presse selon l'une quelconque des revendications 1 à 22, ainsi qu'un bâti isolé de la presse (1, 2) sur lequel sont montées les unités de fixation (3).

25. Ensemble de presses comportant plusieurs presses (1, 2) disposées l'une derrière l'autre et dans une direction d'usinage prédéfinie (X) selon la revendication 23 ou 24, de telle manière qu'une pièce (40) peut être transférée d'une première presse à une dernière presse (1, 2) au moyen des bras de déplacement.

26. Ensemble de presses selon la revendication 25, sachant respectivement qu'un système de transfert de presse est disposé au centre entre deux presses successives (1, 2) .

27. Ensemble de presses selon la revendication 25 ou 26, sachant que
- la première des presses (1) de l'ensemble de presses comporte deux unités de fixation (3) supplémentaires, disposées de façon opposée l'une à l'autre, qui sont disposées sur le côté de la première presse (1), de laquelle les pièces (40) sont pour la première fois acheminées à l'ensemble de presses pour usinage, et/ou
- la dernière des presses (2) comporte deux unités de fixation (3) supplémentaires, disposées opposées l'une à l'autre, qui sont disposées sur le côté de la dernière presse (2) de laquelle elles sont enlevées de l'ensemble de presses après le dernier usinage.
